Europäisches Patentamt

European Patent Office

Office européen des brevets

(11) Publication number: **0 089 379**
**B1**

(12) **EUROPEAN PATENT SPECIFICATION**

(45) Date of publication of patent specification: **08.06.88**

(21) Application number: **82102172.2**

(22) Date of filing: **17.03.82**

(51) Int. Cl.⁴: **B 23 P 11/02**

(54) Method of producing multiple-wall, composite tubular structures.

(43) Date of publication of application:
**28.09.83 Bulletin 83/39**

(45) Publication of the grant of the patent:
**08.06.88 Bulletin 88/23**

(84) Designated Contracting States:
**DE FR GB NL SE**

(56) References cited:
**EP-A-0 015 712**
**EP-A-0 037 214**
**GB-A-2 019 760**
**US-A-2 975 259**
**US-A-3 241 221**

(73) Proprietor: **KAWASAKI JUKOGYO KABUSHIKI KAISHA**
**1-1 Higashikawasaki-cho 3-chome**
**Chuo-ku Kobe-shi Hyogo-ken (JP)**

(72) Inventor: **Yoshida, Toshio**
**2-23, Rikyumae-Cho 1-Chome Suma-Ku Kobe-Shi**
**Hyogo-Ken (JP)**
Inventor: **Matsui, Shigetomo**
**4-25, Higashiyama-Cho Higashiosaka-Shi**
**Osaka-Fu (JP)**
Inventor: **Atsuta, Toshio**
**6-21, Uenomaru 2-Chome Akashi-Shi**
**Hyogo-Ken (JP)**

(74) Representative: **Klunker, Hans-Friedrich, Dr. et al**
**Patentanwälte Klunker . Schmitt-Nilson . Hirsch**
**Winzererstrasse 106**
**D-8000 München 40 (DE)**

## Description

The invention relates to a method of producing a multiple-wall composite tube having an interference fit between an outer tube and an inner tube, comprising a step of applying heat to the outer tube to establish a temperature difference between the outer tube and the inner tube and a step of applying pressure to the inner surface of the inner tube inserted into the outer tube thereby to cause the inner tube to expand plastically in diameter into tight contact with the outer tube, the heat and pressure being removed thereafter.

Composite metal tubes having laminated multiple walls are known and can, in particular, be used for piping in chemical and other plants, as oil and gas well tubings, for oil and gas pipelines, and like pipes. Among the multiple-wall composite tubes of the character referred to above and known heretofore for transporting fluids such as those containing corrosive substances, there are double-wall pipes in each of which the inner pipe or liner tube is made of a corrosion-resistant material for effective conducting of corrosive fluid, while the outer pipe is designed to provide strength to withstand internal pressures and external forces. For example, there is a double-wall pipe comprising a stainless-steel inner pipe and a carbon-steel outer pipe in which the inner pipe is fitted.

In a known method of the above-indicated kind (EP—A—0 015 712) the outer tube is heated as a whole, the inner tube is cooled as a whole, the inner tube is inserted into the outer tube, then the inner tube is plastically expanded by internal pressure against and together with the outer tube, and thereafter the pressure is removed and the outer and inner tubes are allowed to adopt ambient temperature.

This known method requires a considerably large-scale heating device comprising a large number of heating elements or the like on the other side of the outer tube, whereby the required equipment becomes disadvantageously large and expensive. Another difficulty arises in the case of tubes of long length in that the weight of the apparatus and equipment becomes great, whereby the operation and maintainance thereof become troublesome.

It is the problem underlying the invention to provide a method of producing multiple-wall composite tubes having a high degree of interference fit and excellent characteristics, which method gets along with a smaller-scale and more economic equipment.

According to the invention, the method is characterized in that the heat is applied progressively to the outer tube by producing a heated zone of a limited extent at one end of the outer tube without substantially applying heat to the inner tube and then by causing the heated zone to travel from said one end along a path to the other end of the outer tube, whilst maintaining the pressure applied to the inner tube throughout thus also maintaining close contact between the inner and the outer tube along the whole path.

US—A—2 975 259 discloses a method of producing double-wall composite tubes by moving an induction heater along the length of an outer tube having an inserted inner tube while applying pressure to the inner surface of the inner tube. The heat input is so great, that also the inner tube is heated to a bonding temperature so that a kind of welding takes place.

Preferred developments of the invention are claimed in the dependent claims. For cooling the outer tube a cooling liquid may be applied, for example through nozzles, in a local zone which is caused to travel longitudinally thereof following the movement of the heated zone.

The degree of plastic expansion of the inner tube may be such that it conforms to the thermally increased diameter of the outer tube, or the inner tube may be expanded to a larger extent.

The invention will be more clearly apparent from the following detailed description with respect to a preferred embodiment of the invention when read in conjunction with the accompanying drawings, in which:

Fig. 1 is a fragmentary perspective view, with a part cut away, showing an example of a multiple-wall composite tube produced by the method of this invention;

Fig. 2 is a side view, in longitudinal section, showing the essential parts of one example of apparatus for practising the method of the invention; and

Fig. 3 is a relatively enlarged, fragmentary side view indicating a state of heating to establish a heated zone.

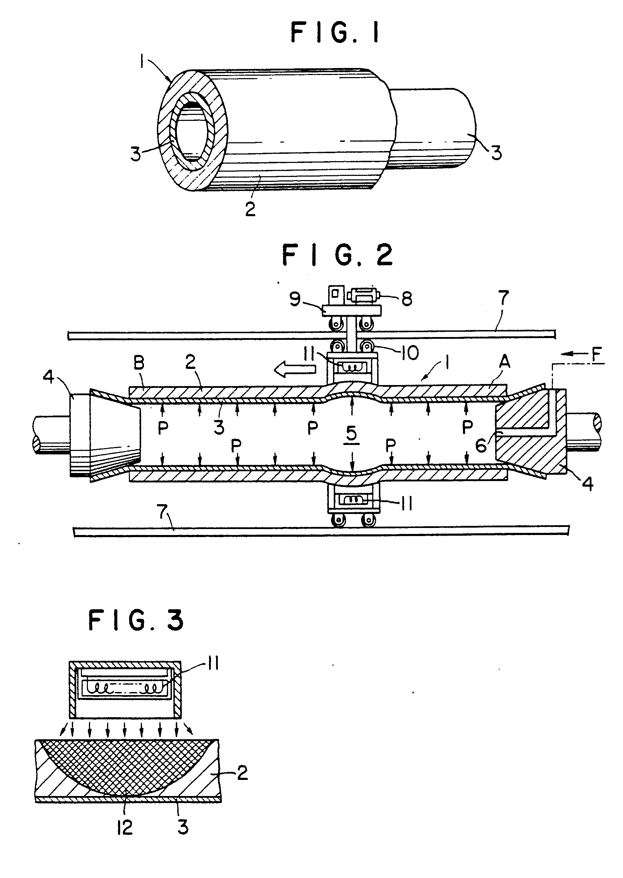

In the embodiment of this invention which will first be described with reference to FIG. 2, the method of this invention is applied to a unit double-wall tube *1*, as also shown in FIG. 1, to be used as an oil well tubing. This double-wall tube *1* comprises an outer tube 2 of carbon steel, for example, and an inner tube 3 of a corrosion-resistant material, such as stainless steel, placed by a suitable procedure in the outer tube 2. The tube *1* is suitably supported in fixed state by means not shown. The opposite ends of this double-wall tube *1* are tightly closed by closing plugs 4 respectively coupled to hydraulic-pressure jacks (not shown) for applying closing force to the plugs. One of these plugs is provided with a liquid passage 6 through which a liquid for tube expanding such as, for example, cold water 5 at a temperature of approximately zero degrees Centigrade is fed by a positive-displacement pumping means (e.g., a plunger pump, not shown) to fill the interior of the inner tube 3.

Then, after the interior of the inner tube 3 has become full of water, pressure *F* is applied to this water by means of the plunger pump thereby to impart a tube-expanding pressure p to the entire inner wall surface of the inner tube 3. Thereafter, the applied liquid pressure is maintained at value of an order to impart plastic deformation to the inner tube 3. The inner tube 3 is therefore pressed into tight contact with the inner surface of the outer tube 2.

With the double-wall tube *1* in this state, the outer tube 2 is heated locally in an annular heated zone thereof around its cylindrical wall to a specific temperature, the annular heated zone being caused to travel at constant speed from one end *A* to the other end *B* of the outer tube 2. This mode of heating of the outer tube 2 is accomplished by a suitable high-frequency induction heating device 11 annularly encircling the outer tube 2 and riding on rollers 10 rolling along a plurality of rails 7 supported on the outer side of the double-wall tube 1 parallelly to the axis thereof. The heating device 11 is driven along the rails 7 from the end *A* to the end *B* by a locomotive truck or carriage 9 driven by a driving motor 8 thereby to cause the annular heated zone to travel as described above.

The outer tube 2 is thus heated in the annular heated zone by the heating device 11 to a depth which is made as near the inner side of the outer tube 2 without any appreciable heat transmission to the inner tube 3 as indicated in FIG. 3, in which the heated zone is represented in a simplified manner in longitudinal section as the area 12 of raised temperature of the order of 300°C, for example. Depending on the design, the outer tube 2 may be heated on only its outer portion.

It is to be noted that the use of a high-frequency induction heating device in this invention is advantageous in that the high-frequency induction heating can be controlled easily as to the depth of the portion of material to be heated thereby. This means that the heating device 11 can be so controlled as to apply heat only to the outer tube 2 and not to the inner tube 3. Therefore, establishment of substantial temperature difference between the outer and inner tubes can be made possible even in the state where the inner tube 3 is pressed against the inner surface of the outer tube 2 and there is no clearance between the two tubes.

Thus, as the high-frequency heating device 11 travels in the longitudinal direction of the double-wall tube 1, the heated portion 12 travels from the end *A* to the end *B*. As a consequence, in the travelling heated zone, the tube-expanding force due to the hydraulic pressure applied to the interior of the inner tube 3 causes the inner tube to expand plastically in diameter so as to conform to the thermally increased diameter of the outer tube 2. After the heated zone has passed by each portion of the tube 1, the inner and outer tubes in that portion shrink in diameter.

The inner tube 3 has an initial, natural outer diameter but, when it is filled with the cold tube-expanding liquid 5, is cooled and contracts to a smaller diameter. Then, when the liquid pressure is increased, the inner tube 3 expands until it yields and can undergo plastic deformation, whereby the clearance between the outer tube 2 and the inner tube 3 is eliminated. The inner diameter of the outer tube 2 increases slightly in the heated area 12 under the effect of the high-frequency heating device 11, and it is possible to practise the invention such that the outer tube 2 expands, in addition, elastically or even plastically under the tube-expanding force of the inner tube 3. Each portion of the outer tube 2, which has been passed by the high-frequency heating device 11, cools and shrinks thermally. When the high-frequency device 11 reaches the terminal end *B*, the plugs 4 are removed to discharge the tube-expanding water 5 and release the tube-expanding pressure, whereby both the outer tube 2 and the inner tube 3 shrink elastically. At the same time, the temperature of the inner tube 3 rises from the previous cooled value to the natural ambient temperature, whereby the diameter of the inner tube 3 tends to increase. As a result of these processes, an interference fit is obtained between the two tubes.

In the above described process, since the heated region 12 does not reach the inner tube 3, the temperature of the tube-expanding water 5 does not rise, whereby the water retains its cooling effect.

In one example of specific experimental practice of this invention, an inner tube of stainless steel (AISI 316L) of 1 mm wall thickness was inserted in a carbon-steel outer tube of an inner diameter of 90 mm and 9 mm wall thickness, and a hydraulic pressure of 800 Kg/mm$^2$ was applied to the interior of the inner tube.

The composite tube thus formed was heated, while the internal pressure was being applied to the inner tube, according to the method of this invention by a high-frequency induction heating device comprising essentially an induction coil adapted to encircle the outer tube and having a width of 120 mm in the longitudinal or axial direction of the tubes. Electric current at a frequency of 3 KHz was passed through this induction coil as it was caused to travel in the axial direction at a speed of 300 mm/minute, whereby each point or cross section of the outer tube was heated for a period of approximately 25 seconds.

As a result, it was found that the outer tube temperature was 350°C (average) and that of the inner tube was 50°C (average).

The modes of practicing this invention are not limited, of course, to those of the above described embodiment of the invention, various other modes being possible. For example, a high-frequency induction heating device of a shape corresponding to a convolution of a helix can be used in the heating device to heat the outer tube 2 along a helical heating path.

Furthermore, the method of producing composite tubes according to this invention is not limited to producing tubes for oil and gas well tubings but is also advantageously applicable to the production of pipes for fluid-conveying pipelines, pipes for piping in plants, and other pipes and tubular and cylindrical structures.

The annular heating device used in this method is advantageous in that it is basically applicable to composite tubes of any length because the heating device is of a locally-heating travelling type and is not required to cover the entire length of each composite tube. Another feature is that this heating device of locally-heating travelling type can be made relatively small and simple in construction. Accordingly, the space occupied by the entire apparatus can be reduced, and the initial cost can be lowered. Furthermore, the work of maintenance of the apparatus is facilitated and made safe.

Still another merit of this method is that, since the heating device is adapted to travel in the axial direction of the composite tube, the quantity of heat imparted to the outer tube 2 can be regulated by adjusting the travelling speed of the heating device, which is advantageous for control purposes. By such control, heating can be carried out in a concentrated manner in a short time.

A further advantage of this method is that, since a relatively low temperature for heating is sufficient to create a temperature difference between the two pipes, the product precision can be made high without causing deterioration of the properties of the outer tube, and there is no heating of the pressure applying liquid, whereby a separately provided cooling liquid is not necessary.

The invention can also be applied to the production of other multiple-wall composite tubes formed from more than two tubes.

## Claims

1. A method of producing a multiple-wall composite tube (1) having an interference fit between an outer tube (2) and an inner tube (3), comprising a step of applying heat to the outer tube (2) to establish a temperature difference between the outer tube (2) and the inner tube (3) and a step of applying pressure to the inner surface of the inner tube (3) inserted into the outer tube (2) thereby to cause the inner tube (3) to expand plastically in diameter into tight contact with the outer tube (2), the heat and pressure being removed thereafter, characterized in that the heat is applied progressively to the outer tube (2) by producing a heated zone (12) of a limited extent at one end (A) of the outer tube (2) without substantially applying heat to the inner tube (3) and then by causing the heated zone (12) to travel from said one end (A) along a path to the other end (B) of the outer tube (2), whilst maintaining the pressure applied to the inner tube throughout thus also maintaining close contact between the inner and the outer tube along the whole path.

2. A method according to claim 1, wherein the heat is applied by high-frequency induction heating.

3. A method according to claim 1 or 2, wherein the heated zone (12) is substantially annular.

4. A method according to claim 1 or 2, wherein the outer tube (2) is heated along a helical path therearound with a helical pitch sufficient for full heating coverage of the outer tube (2).

5. A method according to any one of the claims 1 to 4, wherein the temperature difference between the outer and inner tubes (2, 3) is increased by using a liquid of a low temperature for applying the pressure.

6. A method according to any one of the claims 1 to 5, wherein after applying heat to the outer tube (2), the outer surface of the outer tube (2) is cooled with a liquid of low temperature in a local zone encircling the outer tube (2) and travelling longitudinally thereof.

7. A method according to claim 6, wherein the liquid is applied by means of nozzles.

## Patentansprüche

1. Verfahren zum Herstellen eines mehrwandigen zusammengesetzten Rohrs (1), das zwischen einem Außenrohr (2) und einem Innenrohr (3) einen Festsitz aufweist, mit einem Schritt, bei dem das Außenrohr (2) mit Wärme beaufschlagt wird, um zwischen dem Außenrohr (2) und dem Innenrohr (3) eine Temperaturdifferenz zu erzeugen, und mit einem Schritt, bei dem auf die Innenfläche des in das Außenrohr (2) eingeführten Innenrohrs (3) Druck ausgeübt wird, um dadurch das Innenrohr (3) dazu zu veranlassen, sich in seinem Durchmesser in festen Kontakt mit dem Außenrohr (2) plastisch auszudehnen, wonach die Wärme und der Druck entfernt werden,
dadurch gekennzeichnet, daß das Außenrohr (2) progressiv mit Wärme beaufschlagt wird, indem eine erwärmte Zone (12) begrenzten Ausmaßes an einem Ende (A) des Außenrohrs (2) erzeugt wird ohne das Innenrohr (3) im wesentlichen mit Wärme zu beaufschlagen, und indem die erwärmte Zone (12) dann dazu veranlaßt wird, von dem genannten einen Ende (A) entlang einer Bahn zu dem anderen Ende (B) des Außenrohrs (2) zu wandern, während der auf das Innenrohr ausgeübte Druck durchwegs aufrechterhalten wird und somit auch ein enger Kontakt zwischen dem Innenrohr und dem Außenrohr entlang der gesamten Bahn aufrechterhalten wird.

2. Verfahren nach Anspruch 1, dadurch gekennzeichnet, daß die Wärme durch Hochfrequenz-Induktionserwärmung aufgebracht wird.

3. Verfahren nach Anspruch 1 oder 2, dadurch gekennzeichnet, daß die erwärmte Zone (12) im wesentlichen ringförmig ist.

4. Verfahren nach Anspruch 1 oder 2, dadurch gekennzeichnet, daß das Außenrohr (2) entlang einer um dieses herumführenden schraubenlinienförmigen Bahn erwärmt wird, die eine schraubenlinienförmige Steigung aufweist, die zur vollen Erwärmungserfassung des Außenrohrs (2) ausreichend ist.

5. Verfahren nach einem der Ansprüche 1 bis 4, dadurch gekennzeichnet, daß die Temperaturdifferenz zwischen Außen- und Innenrohr (2, 3) durch Verwendung einer Flüssigkeit mit einer niedrigen Temperatur zur Ausübung des Drucks erhöht wird.

6. Verfahren nach einem der Ansprüche 1 bis 5, dadurch gekennzeichnet, daß nach der Wärmebeaufschlagung des Außenrohrs (2) die Außenfläche des Außenrohrs (2) mit einer Flüssigkeit niedriger Temperatur in einer das Außenrohr (2) umschließenden und in Längsrichtung desselben wandernden, lokalen Zone gekühlt wird.

7. Verfahren nach Anspruch 6, dadurch gekennzeichnet, daß die Flüssigkeit mittels Düsen aufgebracht wird.

## Revendications

1. Un procédé de fabrication d'un tube composite (1) présentant un assemblage par intrusion entre un tube extérieur (2) et un tube intérieur (3), comprenant une opération d'application de chaleur au tube extérieur (2) afin d'établir une différence de température entre le tube extérieur (2) et le tube intérieur (3) et une opération d'application de pression à la surface intérieure du tube intérieur (3) inséré dans le tube extérieur (2) de façon à faire ainsi dilater de manière plastique le diamètre du tube intérieur (3) pour l'amener en contact étroit avec le tube extérieur (2), la chaleur et la pression étant supprimées ultérieurement, caractérisé en ce que la chaleur est appliquée progressivement au tube extérieur (2), en formant une zone chauffée (12) de grandeur limitée à une extrémité (A) du tube extérieur (2) sans pratiquement appliquer de chaleur au tube intérieur (3) et puis en faisant déplacer la zone chauffée (12) depuis ladite première extrémité (A) le long d'une trajectoire jusqu'à l'autre extrémité (B) du tube extérieur (2), tout en maintenant la pression appliquée d'un bout à l'autre du tube intérieur en maintenant ainsi un contact étroit entre le tube intérieur et le tube extérieur tout le long de la trajectoire.

2. Un procédé selon la revendication 1, dans lequel la chaleur est appliquée au moyen d'un chauffage par induction à haute fréquence.

3. Un procédé selon la revendication 1 ou 2, dans lequel la zone chauffée (12) est sensiblement annulaire.

4. Un procédé selon la revendication 1 ou 2, dans lequel le tube extérieur (2) est chauffé sur son pourtour le long d'une trajectoire hélicoïdale ayant un pas hélicoïdal suffisant pour assuer un chauffage couvrant complètement le tube extérieur (2).

5. Un procédé selon l'une quelconque des revendications 1 à 4, dans lequel la différence des températures entre les tubes extérieur et intérieur (2, 3) est augmentée en employant un liquide à basse température pour appliquer la pression.

6. Un procédé selon l'une quelconque des revendications 1 à 5, dans lequel après application de chaleur au tube extérieur (2), la surface extérieure du tube extérieur (2), est refroidie avec un liquide à basse température dans une zone locale entourant le tube extérieur (2) et se déplaçant dans la direction longitudinale de ce dernier.

7. Un procédé selon la revendication 6, dans lequel le liquide est appliqué au moyen d'ajutages.

# F I G. I

# F I G. 2

# F I G. 3

1